# EUROPEAN PATENT APPLICATION

(11) **EP 1 764 956 A1**
(43) Date of publication of application: **21.03.2007**
(21) Application number: 05019959.5
(22) Date of filing: 14.09.2005
(51) Int. Cl.: H04L 12/56

(54) **Method for load balancing in a network**

(71) Applicant: SIEMENS AKTIENGESELLSCHAFT, 80333 München (DE)
(72) Inventor: Ribeiro, Alexandre, 2615-063 Alverca (PT)
(74) Representative: Fischer, Michael

(57) **Abstract**

Method for load balancing in a network is proposed, whereby
- a plurality of MSTIs is selected from a database,
- at least one active route is identified in an MSTI,
- the bandwidth used by the route is determined,
- an MSTIs is classified dependant on the bandwidth used in each route,
- an MSTI containing at least one route with the lightest usage of bandwidth is selected as a path for data transmission.

## Description

The invention relates to load balancing in a network, in particular in an Ethernet based network.

In an Ethernet network, switches can be transparent, that is, a destination network element of a frame does not know that a frame may have passed through a number of switches. A frame is a packet of data transferred through the network and usually contains one or more headers that identify the origin or destination of the frame along with its length. If an Ethernet network contains loops, that is, if there is more than one route from one network element to another, this transparency is lost, since the frame is then duplicated when transferred through the multiple switches. Thus, the duplication betrays the fact that the frame has passed through a plurality of switches. This scenario can be further exasperated when another set of switches does not know that a frame has already been duplicated, such that the said other set of switches might therefore duplicate the frame yet again. The resulting flurry of data transfer is called a broadcast storm.

It is, however, known to provide more than one path from an origin to a destination via a plurality of switches. This is done to provide redundancy in a network, for example if a switch or a network element containing a switch has a fault or if a transmission line or link is interrupted. In this case, it is known to ensure that there remains only one logical path from a given network element to another, which is achieved by superior layer protocols. One example of such a superior layer protocol is called STP (Spanning Tree Protocol).

One goal underlying to be achieved is to be seen in providing a means or a method for selecting an area of a network with minimal traffic.

One way the goal is achieved is in providing a method for load balancing in a network, whereby
- a plurality of Multiple Spanning Tree Instances (MSTIs) is selected from a database,
- at least one active route is identified in each MSTI,
- the bandwidth used by the route is determined, (see previous comment)
- each MSTI is classified dependant on the bandwidth used in each route,
- the MSTI containing at least one route with the lightest usage of bandwidth is selected as a path for data transmission.

MSTIs are entities that contain a VLAN (Virtual Local Area Network) range and an STP (Spanning Tree Protocol) tree. The database may be part of a workstation or another end-user or client device. The database is more generally to be seen in being contained in a knowledge base.

The method has the advantage that the lightest loaded MSTI, that is, the MSTI with the least network traffic, can automatically be chosen and adopted as a transmission means for data, such as a service. This is rapidly done without cumbersome analyses of complex networks, which may include a plurality of VLANs.

The active route identified is preferably one that is used by at least one service.

According to a preferred addition to the method, at least one MSTI is switched according to Multiple Spanning Tree Protocol (MSTP). This enables loop-free data transfer in an environment of a plurality of VLANs.

According to yet another addition to the method, the MSTI is classified according to the ratio of the sum of used bandwidth and the sums of the bandwidth capacity of all links in the MSTI.

An alternative method lies in the MSTI being classified according to the highest ratio of the bandwidth used on any link of the MSTI and its maximum bandwidth capacity.

The methods of classification are easily implemented and applicable to all MSTIs.

The described methods are further explained by the following examples and drawings, whereby:
- Drawing 1: shows a network between two network elements, wherein between the network elements links and switches are provided,
- Drawing 2: shows a network according to drawing 1, to which an STP protocol is applied,
- Drawing 3: shows a plurality of switches connected to a plurality of VLANs,
- Drawing 4: a linkage of a plurality of switches with an STP protocol applied, whereby each switch is connected to a plurality of VLANs,
- Drawing 5: a linkage of plurality of switches according to drawing 4 where an MSTP protocol is applied,
- Drawing 6: two MSTIs with links that are loaded differently.

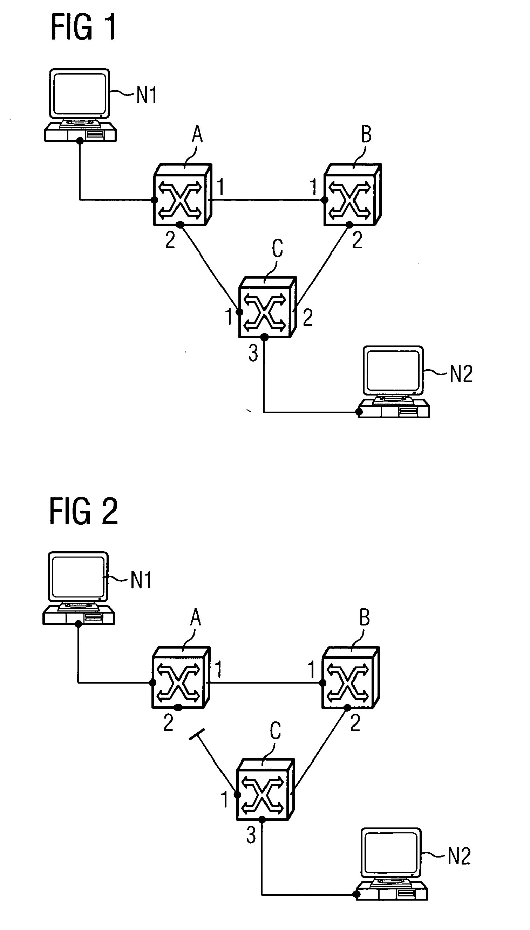

Drawing 1 shows a network containing two network elements N1 and N2 and switches A, B and C positioned between them. Each switch is equipped with ports 1, 2 and 3. Examples of network elements would include workstations, PCs, mobile phones or other End-User or Client devices. Switches can be electronic or optical.

Should N1 send a frame to N2, two frames (data packets) would arrive at N2, since switch A would broadcast through all of its ports 1 and 2 except the port which received the data from (port is not given a number). This is because switch A may not yet have learned the location of N2. Two frames, i.e., a set of duplicated frames, would then reach switch C, which would then broadcast the said two frames to all of its ports, except the ones from which it received the frames. For example, when switch C receives a frame from switch B, it will broadcast through its ports 1 and 3. That means that one frame in fact get transmitted or switched back to switch A. When switch C receives a frame directly from switch A, it will broadcast the frame through its ports 2 and 3. That means that one frame is also transferred to switch B. Switch C therefore learns two possible locations for workstation N2, a result of the fact that it received the frame both directly from switch A and indirectly also from switch B. Switch C would store only one location for workstation N1, thinking that it had changed location.

Two frames, therefore, would reach workstation N2, thereby breaking the transparency rule, and would be forwarded to A and B, which would each receive them and think that workstation N1 had changed its location.

The above process is advantageous for its redundancy properties. However, when repeated, it may consume a considerable amount of amount of the bandwidth available in the network.

By using a so-called Spanning Tree Protocol, the switches A to C may exchange messages between themselves, in order to ensure that only one logical path exists between a given network element, such as N1, and another, such as N2. Based on these messages, the network elements can then block the traffic from specific ports in order to avoid a loop as described above. Thus, there will only exist one logical path from one network element to another, even if they are still physically connected to each other.

Drawing 2 shows how using an STP, switch A can block traffic from being transmitted through port 2. This effectively cuts the loop and ensures, at least for this network as shown, that only one logical path is provided from one network element to another.

In an Ethernet network, whenever a switch does not know where to deliver a frame, for example because it has not been provided with a MAC Address (Media Access Control Address), which is an identifier attached to most forms of networking equipment, it can broadcast to all its ports, except for the one through which it received the frame. Along with consuming considerable amounts of bandwidth, such broadcasts can end up being sent to non-intended recipients, which may raise security issues.

To deal with this, a VLAN (Virtual Local Area Network) may be usefully employed. A VLAN is a logically independent network, even if physically it may be indistinguishable from a generic LAN. It can be provided with a unique MAC-Address. It may restrict access to network resources without regard to physical topology of the network. By keeping an internal table containing the VLANs and the ports where these VLANs are assigned to, a network element is able to broadcast the frames belonging to a given VLAN just to the ports where that VLAN is assigned to. Ethernet frames can therefore be provided with VLAN tags or headers which allocate the frame to a certain VLAN. Thus, whenever a switch receives a frame, the tag may be examined to determine which VLAN the frame belongs to.

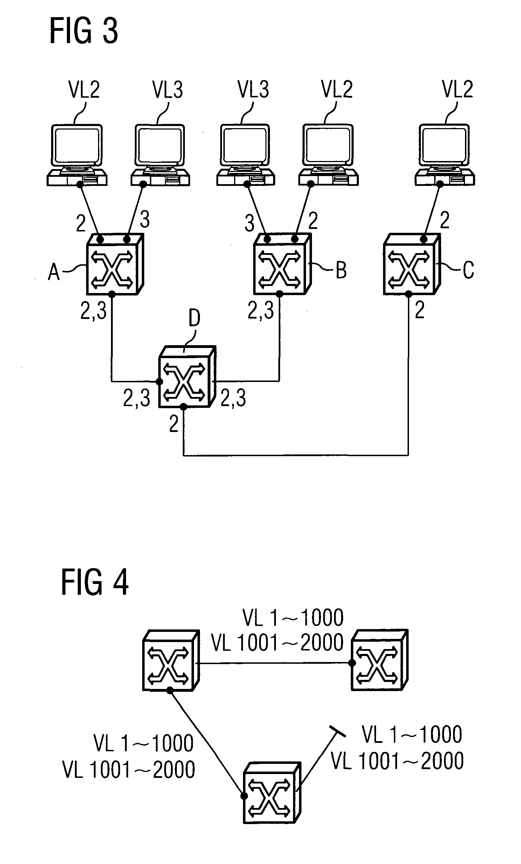

Drawing 3 shows different VLANs VL2, VL3 connected to a plurality of switches A, B, C, D that have ports 2 and 3 assigned to VL2 and VL3, respectively. Thus, only the frames that belong to the corresponding VLAN are allowed to pass. All others may be discarded. For example, when a workstation belonging to VL2 sends frames, it marks them with VLAN tag 2. When a switch receives frames from VL2, it only broadcasts them to ports that have VL2 membership, i.e. to ports 2. A port may, however, have several VLAN memberships. In this drawing, such ports are designated by 2,3, which means that port 2,3 has VLAN membership for VLANs 2 and 3. This will advantageously enable assuring connectivity between workstations in different switches, but belonging to the same VLAN.

Drawing 4 represents an Ethernet network, where STP and VLANs are used. The VLAN range 1 to 1000 belongs to customer A and the VLAN range 1001 to 2000 to customer B. The Spanning Tree Protocol would not allow traffic to go through one of the links in order to avoid loops, and would do so for all the VLANs. The means that one link would have no data traffic at all. With an MSTI (Multiple Spanning Tree Instance), which is an entity that contains a VLAN range and an STP tree, this can be avoided. With an MSTI it therefore becomes possible for an MSTP (Multiple Spanning Tree Protocol) to balance network traffic. The Multiple Spanning Tree network protocol provides a loop free topology for any LAN or bridged network.

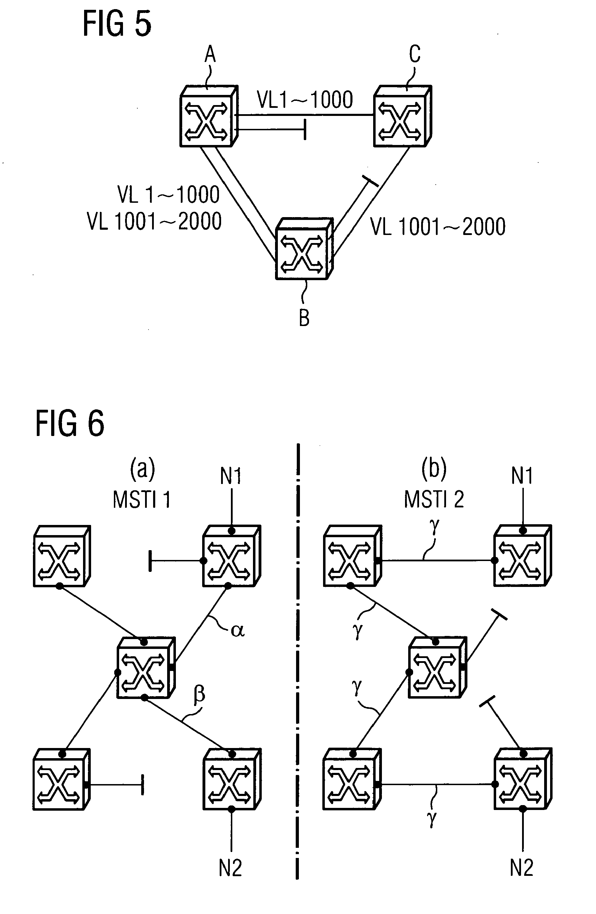

Drawing 5 shows how with the usage of MSTIs, one spanning tree for the VLAN range 1 to 1000 and a different spanning tree for the VLAN range 1001 to 2000 is provided. This way the network is more balanced that the one using only STP, since all the links are actually being used. The link from A to B thus carried both MSTIs, i.e., VLAN range 1 to 1000 and VLAN range 1001 to 2000. The remaining links carry one MSTI each, that is, one VLAN range each. Thus, for the connection between switches A and C, alone the VLAN range 1 to 1000 is permissible and for the connection between switches B and C, the VLAN range 1001 and 2000.

In a network management system in an Ethernet network, a service is an object that contains the relation between a customer and the network resources the customer uses. The resources can be indicated by, amongst other attributes, the links the service goes through, the class of the service, which contains the service's priority relative to other services in the network, and the service's VLAN. The attributes can be entered into a GUI (Graphical User Interface). An operator or a program may specify the source network element and the destination network element for the service, such as the network elements N1 and N2 shown in drawings 1 and 2, and may select the ports to be used and indicate the service's class and VLAN. This is an advantageous approach for STP networks, as the choice of a VLAN does not influence the STP tree the service will use.

However, when MSTP is used, which can be the case when several VLANs are present, a situation where the logical network configured by a single STP would fail, the choice of the service's VLAN will affect the STP tree that will be used. In networks where a plurality of MSTIs, and therefore a plurality of STP trees, are present, it becomes difficult for an operator or a program to know which VLAN ought best be selected for the service. This choice is important, however, since while one MSTI might have links that are overloaded with traffic, others may not be overloaded and would be a good alternative to mount the service.

A further improvement to the network management described so far could therefore lie in allowing the operator to select the lightest.loaded MSTI and therefore enable him to achieve a better load balancing of the network. Thus, a method for proposing a VLAN for the service being created would be advantageous. The method preferrably involves the establishment of an order when requesting the service attributes in the GUI, since the source and the destination ports of the service are helpful in order to determine the service's route, i.e. the links it will use, and to determine the preferrably least loaded MSTI for those links.

One aspect of the method involves initially creating MSTIs, selecting the ports of the service along with a bandwidth calculation method. The created MSTIs may then be retrieved from a database, whereby the MSTIs contain the MSTI number, the VLAN ranges assigned to it and the STP tree. For each MSTI, i.e., for each STP in each MSTI, the routes through which the service goes through are determined. This can involve merely finding a path inside the STP tree. The services passing through each link of the discovered routes are then retrieved. The used bandwidth in each link is then calculated, after which the MSTIs can be classified according to one of the following methods:
1. Determining the ratio of the sum of all used bandwidth and the sum of all the links capacities.
2. Determining the hightest ratio of the bandwidth used on a given link and its capacity.
3. A method used in flow control.

The method used to classify the MSTIs can be set either by using the GUI in the network management system application or via a configuration file.

The operator or the program, which can be a switching or a controller program, is presented with an input field which already contains the VLAN proposed by the method described above. The proposal was dependent on the classification methods 1 and 2. For example, according to the classification methods 1 and 2. the VLANs in the MSTIs with the lowest ratio would be the ones suggested by the method for proposing a VLAN. According to one aspect of the method, the proposed VLAN is selectable, for example by confirmation of the proposal in the input field, or may be automatically adopted by a program for selecting a VLAN.

Drawing 6 shows two MSTIs in the same network, where all the links have 100Mbps of maximum capacity. Consider that an operator or a program wishes or create a service from A to B. According to Drawing 6a, the service goes through two links in MSTI 1, the first link using a = 50 Mbps and the second link using β = 90 Mbps. Therefore, the ratio to classify this MSTI 1 by the classification method 1 described above would be (50 + 90)/(100 + 100) = 0.7. using the second classification method 2, the result would be 0.9, since the ratio of the first link is 0.7 and the highest ratio is chosen.

In MSTI 2, shown in Drawing 6b, the ratio determined would give 0.75 using either classification method 1 or 2 as the data tranfer rates γ on the links are each at 75 Mbps. Thus, if the chosen method of evaluation was the average bandwidth, the to use of the first free VLAN within MSTI 1, since it had the lowest ratio (0.7 compared to 0.75 in MSTI 2), would be proposed. However, if the network management system was configured to use the second classification method, the use of VLANs from MSTI 2 would be proposed.

The method for load balancing thus presented is therefore advantageous in that it does not rely on prolonged network and service analysis to achieve load balancing. The method may be employed in service creation and selects the lightest loaded MSTI according to defined criteria. An operator or a program would not require detailed knowledge of the traffic distribution in the network. The feature of providing an input field, such as a text box, with a proposed value is user friendly.

### List of Abbreviations

- N1: source network element
- N2: destination network element
- A,B,C,D: switches
- 1,2,3: ports
- VL2,VL3: VLANS
- α, β,γ: data transfer rates

## Claims

1. Method for load balancing in a network, whereby
- a plurality of Multiple Spanning Tree Instances (MSTIs) is selected from a database,
- at least one active route is identified in each MSTI,
- the bandwidth used by the route is determined,
- each MSTI is classified dependant on the bandwidth used in each route,
- the MSTI containing at least one route with the lightest usage of bandwidth is selected as a path for data transmission.

2. Method according to claim 1, whereby at least one MSTI is switched according to Multiple Spanning Tree Protocol (MSTP).

3. Method according to one of the claims 1 or 2, whereby the MSTI is classified according to the ratio of the sum of used bandwidth and the sums of the bandwidth capacity of all links in the MSTI.

4. Method according to claims 1 or 2, whereby the MSTI is classified according to the highest ratio of the bandwidth used on any link of the MSTI and its maximum bandwidth capacity.
